# EUROPÄISCHE PATENTANMELDUNG

(11) **EP 3 382 425 A1**
(43) Veröffentlichungstag der Anmeldung: **03.10.2018**
(21) Anmeldenummer: 18161659.0
(22) Anmeldetag: 14.03.2018
(51) Int. Cl.: G01S 19/07, G01S 19/41, G01S 19/34

(54) **POSITIONSBESTIMMUNG AUF BAUSTELLEN MIT UNTERSTÜTZUNG DURCH EINE NAHEGELEGENE MESSSTATION**

(30) Priorität: 14.03.2017 DE 102017204160
(71) Anmelder: Robert Bosch GmbH, 70442 Stuttgart (DE)
(72) Erfinder: Brenk, Achim, 75236 Kaempfelbach (DE); Koenig, Jens, 71706 Markgroeningen (DE); Schurr, Joachim, 73107 Eschenbach (DE)

(57) **Zusammenfassung**

Verfahren (100) zur Ermittlung der Position (10) einer Markierungsvorrichtung (1), die einen Empfänger (11) für ein satellitengestütztes Navigationssystem (2) aufweist und dazu ausgebildet ist, ihre Position (10) anhand der von einer Mehrzahl von Satelliten (21-24) ausgesendeten Signale (21a-24a) zu ermitteln (190) und hierbei die durch den Empfänger (11) ermittelten Laufzeiten (21b-24b) um einen Korrekturbeitrag (21c-24c), der den Einfluss der Ionosphäre (3) beschreibt, zu bereinigen (180), wobei die Markierungsvorrichtung (1) über eine bidirektionale Funkverbindung (4) an ein Gateway (5) gekoppelt ist, mit folgenden Schritten:
• anhand der Position (50) des Gateways (5), und/oder anhand einer zuvor ermittelten Position (10) der Markierungsvorrichtung (1), wird eine Messstation (61) ausgewählt (110), die von jedem der Satelliten gleichzeitig ein erstes Signal (21a-24a) auf einer ersten Frequenz und ein zweites Signal (21d-24d) auf einer zweiten Frequenz empfängt und aus dem Vergleich der Signallaufzeiten einen satellitenindividuellen Korrekturbeitrag (21c-24c) ermittelt;
• die Korrekturbeiträge (21c-24c) werden von der Messstation (61), und/oder von einem durch die Messstation (61) belieferten Datenserver (65), abgerufen (120);
• es wird eine verdichtete Auswahl (25) der Korrekturbeiträge (21c-24c) generiert (130);
• die verdichtete Auswahl (25) der Korrekturbeiträge (21c-24c) wird über die bidirektionale Funkverbindung (4) an die Markierungsvorrichtung (1) übermittelt (140).

## Beschreibung

Die vorliegende Erfindung betrifft ein Verfahren zur Ermittlung der Position einer Markierungsvorrichtung, bei dem die Genauigkeit einer satellitengestützten Positionsbestimmung durch Hinzuziehung von Korrekturwerten einer nahe gelegenen Messstation gesteigert wird.

### Stand der Technik

Auf Baustellen ist es auf Grund beengter Platzverhältnisse nicht immer möglich, jedem Gegenstand einen festen Lagerplatz zuzuweisen. Bei häufig verwendeten Gegenständen, und insbesondere bei Verbrauchsmaterialien, ist eine kontinuierliche Buchführung, hinsichtlich der Verwendung sowie des Lagerortes, nicht praktikabel. Im Ergebnis wird auf Baustellen sehr viel Arbeitszeit damit verbracht, Gegenstände und Materialien zu suchen.

Die US 2014 240 143 A1 offenbart, die Position des Objekts mit Hilfe von globalen satellitengestützten Navigationssystemen, GNSS, zu bestimmen und die Positionsinformation mittels Sub-1GHz-Funksignalen zu versenden. Die damit erzielbare laterale Genauigkeit liegt zwischen 15 und 35 Metern, was zur Lokalisierung eines Objekts auf einer Baustelle nicht immer ausreicht.

Die US 2007/085 734 A1 offenbart eine portable Referenzstation, die ihren Standort anhand eines oder mehrerer zuvor eingespeicherter Standorte erkennt und dann Korrektursignale für ein Differential-GPS bereitstellt. Damit kann die Ungenauigkeit des GNSS symptomatisch behandelt werden.

Die Hauptursache für die Ungenauigkeit ist, dass das Signal der Navigationssatelliten auf dem Weg zum Empfänger die Ionosphäre der Erde durchlaufen muss. Abhängig vom aktuellen lonisationsgrad ändert sich der Brechungsindex der Ionosphäre, und somit ihre optische Dichte. Damit ändert sich wiederum die Gruppengeschwindigkeit des Signals, und die für die Positionsbestimmung ausgewerteten Laufzeitmessungen werden verfälscht.

Um diesen Fehler systematisch zu korrigieren, wird die Laufzeitverzögerung systematisch erfasst und kartographiert. Die US 2015/145 722 A1 offenbart Beispiele für derartige Karten und deren Anwendung im Bereich der Flugzeugnavigation.

### Offenbarung der Erfindung

Im Rahmen der Erfindung wurde ein Verfahren zur Ermittlung der Position mindestens einer Markierungsvorrichtung entwickelt. Die Markierungsvorrichtung weist einen Empfänger für ein satellitengestütztes Navigationssystem auf und ist dazu ausgebildet, ihre Position anhand der von einer Mehrzahl von Satelliten eines Navigationssystems ausgesendeten Signale zu ermitteln. Die Markierungsvorrichtung ist weiterhin dazu ausgebildet, hierbei die durch den Empfänger ermittelten Laufzeiten der Signale um einen Korrekturbeitrag, der den Einfluss der Ionosphäre auf diese Laufzeiten beschreibt, zu bereinigen. Über eine bidirektionale Funkverbindung ist die Markierungsvorrichtung an ein Gateway gekoppelt.

Erfindungsgemäß werden die folgenden Schritte durchgeführt, insbesondere beispielsweise in der angegebenen Reihenfolge:
Anhand der Position des Gateways, und/oder anhand einer zuvor ermittelten Position der Markierungsvorrichtung, wird eine Messstation ausgewählt, die von jedem der Satelliten gleichzeitig ein erstes Signal auf einer ersten Frequenz und ein zweites Signal auf einer zweiten Frequenz empfängt und aus dem Vergleich der Signallaufzeiten beider Signale einen satellitenindividuellen Korrekturbeitrag ermittelt.

Die satellitenindividuellen Korrekturbeiträge werden von der Messstation, und/oder von einem durch die Messstation belieferten Datenserver, abgerufen.

Es wird eine verdichtete Auswahl der satellitenindividuellen Korrekturbeiträge generiert mit dem Ziel, die zu übermittelnde Datenmenge zu reduzieren.

Die verdichtete Auswahl der Korrekturbeiträge wird über die bidirektionale Funkverbindung an die Markierungsvorrichtung übermittelt.

Es wurde erkannt, dass auf diese Weise die Genauigkeit der Positionsbestimmung in besonders kostengünstiger und schnell zu realisierender Weise auf Werte von wenigen Metern verbessert werden kann. Diese Genauigkeit reicht in der Regel aus, um auf einer Baustelle ein Objekt, das mit einer Markierungsvorrichtung versehen ist, zu lokalisieren.

Insbesondere ist es im Unterschied zu einem herkömmlichen DGPS-System nicht nötig, die Position des Gateways hochgenau einzumessen. Vielmehr muss die Position des Gateways, bzw. der in der Nähe befindlichen Markierungsvorrichtung, nur ungefähr bekannt sein, um eine geeignete Messstation auswählen zu können. Beispielsweise wird in einer besonders vorteilhaften Ausgestaltung der Erfindung von mehreren verfügbaren Messstationen die zur Position des Gateways, bzw. zur zuvor ermittelten Position der Markierungsvorrichtung, nächstgelegene Messstation ausgewählt. Dann entspricht die optische Dichte der Ionosphäre auf dem Weg vom jeweiligen Satelliten zu der Messstation zumindest näherungsweise der optischen Dichte der Ionosphäre auf dem Weg vom jeweiligen Satelliten zum Empfänger der Markierungsvorrichtung.

Besonders vorteilhaft wird eine Ranging Integrity Monitoring Station, RIMS, des European Geostationary Navigation Overlay Service, EGNOS, als Messstation gewählt. Derartige Stationen messen die Laufzeitverzögerung durch ionosphärische Einflüsse im Minutentakt. Die Daten sind kostenfrei im Internet verfügbar.

Derzeit sind nur etwa 40 derartige Messstationen über ganz Europa verteilt. Für eine Positionsbestimmung mit einer Genauigkeit von wenigen Zentimetern gilt die von einer Messstation ermittelte Laufzeitverzögerung nur in einem Umkreis von etwa 20 km um diese Messstation als unmittelbar aussagekräftig. Daher werden üblicherweise die Daten aller Messstationen tomographisch zu einer interpolierenden Karte der Elektronendichte in der Ionosphäre zusammengeführt. Diese Karte deckt den ganzen Bereich, über den die Messstationen verteilt sind, ab. Die Nutzung der Daten genau einer Messstation bewirkt demgegenüber zunächst eine deutliche Verschlechterung.

Es wurde jedoch von den Erfindern erkannt, dass zum einen diese Verschlechterung nicht so groß ist wie es scheint. Die für die tomographische Erstellung der Karte notwendige Mittelung und Glättung fällt ebenso weg wie der Zeitverzug zwischen der Erfassung einer veränderten Laufzeitverzögerung und der nächsten Aktualisierung der tomographisch rekonstruierten Karte. Weiterhin sind speziell bei der Suche nach Objekten beispielsweise auf Baustellen Randbedingungen gegeben, die die Positionsbestimmung zusätzlich erleichtern. So ist das Objekt zwar frei beweglich, die Anforderung an die Genauigkeit der Positionsbestimmung ist aber auf das Gebiet der Baustelle begrenzt. Weiterhin bewegen sich Objekte auf Baustellen typischerweise nicht sehr schnell und in den meisten Fällen nicht diskontinuierlich.

Zum anderen wird eine Verfeinerung der Genauigkeit gerade in den interessierenden Bereich von wenigen Metern in besonders einfacher und kostengünstiger Weise herbeigeführt. In Bezug auf die Reduzierung der Kosten spielt das Gateway eine wichtige Rolle. Indem die Markierungsvorrichtung über die bidirektionale Funkverbindung an das Gateway angebunden ist, muss die Markierungsvorrichtung selbst lediglich in der Lage sein, die vom Empfänger ermittelten Laufzeiten der Signale mit den vom Gateway gelieferten Korrekturbeiträgen zu verrechnen. Die gesamte Intelligenz für die Beschaffung und Aufbereitung der Korrekturbeiträge kann in das Gateway oder in daran angebundene Server verlagert und beispielsweise über das Mobilfunknetz an das Gateway übermittelt werden. Dadurch fällt der entsprechende Aufwand an Hardware auf einer Baustelle, auf der eine Vielzahl von Markierungsvorrichtungen zu lokalisieren sind, im Idealfall lediglich einmal an und nicht etwa für jede weitere Markierungsvorrichtung aufs Neue. Zugleich führt die Berücksichtigung der Korrekturbeiträge auch nicht zu einem erhöhten Energieverbrauch der Markierungsvorrichtung. Üblicherweise steht für das Gateway, bzw. erst recht für die damit gekoppelten Server, Netzstrom zur Verfügung, während die Markierungsvorrichtung zwingend mit einer Batterie gespeist werden muss. Wenn der Stromverbrauch hinreichend gering ist, kann diese Batterie eine Lebensdauerbatterie sein. Bei der Herstellung der Markierungsvorrichtung kann dann der Aufwand für das Vorsehen einer Wechsel- bzw. Auflademöglichkeit eingespart werden. Zugleich entfällt auch der Zeiteinsatz für dieses Wechseln bzw. Aufladen des Energiespeichers.

Zur Kostenreduzierung und zur Verringerung des Stromverbrauchs trägt insbesondere bei, dass lediglich eine verdichtete Auswahl der satellitenindividuellen Korrekturbeiträge vom Gateway an die Markierungsvorrichtung übermittelt wird. Je länger der Empfang dauert, desto länger beanspruchen die Empfangsschaltkreise der Markierungsvorrichtung die Batterie. Außerdem verursacht die Datenübertragung über die bidirektionale Funkverbindung abhängig von der übertragenen Datenmenge Kosten, selbst wenn es sich um eine direkte Funkverbindung handelt: Insbesondere die auf Grund einer Allgemeinzuteilung durch die Fernmeldebehörden kostenlos nutzbaren Frequenzen für Kurzstreckenfunk (sogenannte "Short Range Devices", SRD) unterliegen in der Regel Beschränkungen dahingehend, dass die mittlere zeitliche Belegungsdauer (duty cycle) durch eine Station auf einen bestimmten Betrag begrenzt ist. Damit soll erreicht werden, dass die Frequenzen nicht durch Einzelne monopolisiert werden, sondern für die Allgemeinheit nutzbar bleiben. Reicht die solchermaßen kostenlos bereitgestellte Übertragungskapazität nicht mehr aus, müssen weitere Zuteilungen kostenpflichtig erworben werden.

Hintergrund der Verdichtung ist wiederum, dass die Messstationen ursprünglich für die tomographische Erstellung einer Karte der Elektronendichte der Ionosphäre konzipiert wurden. Dementsprechend groß sind die gelieferten Datenmengen pro Zeiteinheit. Es wurde erkannt, dass die angestrebte Verbesserung der Genauigkeit in den Bereich weniger Meter mit wesentlich weniger Information auskommt.

Die Verdichtung kann insbesondere beispielsweise beinhalten, dass Korrekturbeiträge, die sich auf vom Empfänger der Markierungsvorrichtung voraussichtlich nicht sichtbare Satelliten beziehen, verworfen werden. Je größer die Entfernung zur Messstation ist, desto mehr kann sich auf Grund der Erdkrümmung die Konstellation der sichtbaren Satelliten von der am Ort der Messstation unterscheiden.

In einer weiteren besonders vorteilhaften Ausgestaltung der Erfindung wird bei der Generierung der verdichteten Auswahl der Korrekturbeiträge diejenige Teilmenge der vom Empfänger der Markierungsvorrichtung voraussichtlich zu empfangenden Satelliten, deren Konstellation in Bezug auf die Genauigkeit der Ermittlung der Position der Markierungsvorrichtung vorteilhaft ist, besonders berücksichtigt. Insbesondere kann die verdichtete Auswahl beispielsweise nur die Korrekturbeiträge enthalten, die sich auf die Satelliten in dieser Teilmenge beziehen.

Um die Präzision bei der satellitengestützten Positionsbestimmung zu erhöhen, ist es insbesondere erforderlich, dass sich die Azimut- und Elevationswinkel, unter denen die herangezogenen Satelliten zum Zeitpunkt der Positionsbestimmung vom Ort des Empfängers aus gesehen am Himmel stehen, hinreichend stark voneinander unterscheiden. Es sind also bestimmte Konstellationen von Satelliten aussagekräftiger als andere. Das Gateway, oder ein daran angeschlossener Server, kann nun beispielsweise über einen Almanach oder über noch genauere Ephemeriedaten verfügen, mit denen die am Ort des Empfängers sichtbare Konstellation von Satelliten vorhergesagt werden kann. Für diese Vorhersage ist auch kein zusätzlicher Hardware- und Energieaufwand auf Seiten der Markierungsvorrichtung nötig.

Vielmehr kann beispielsweise auch die Markierungsvorrichtung dazu ausgebildet sein, den Empfänger nur auf die Signale derjenigen Satelliten abzustimmen, zu denen das Gateway Korrekturbeiträge geliefert hat. Das Gateway kann also auf diese Weise der Markierungsvorrichtung signalisieren, welche Satelliten es für besonders aussagekräftig hält. Auf den Empfang weiterer Satelliten muss keine Energie verwendet werden. Die Ersparnis ist erheblich, da Empfänger für satellitengestützte Navigationssysteme vergleichsweise viel Energie und damit Batteriekapazität verbrauchen.

In einer weiteren besonders vorteilhaften Ausgestaltung der Erfindung werden die Korrekturbeiträge bei der Generierung der verdichteten Auswahl zeitlich heruntergetaktet (downsampled) und/oder gemittelt. Typischerweise werden die Korrekturbeiträge von den Messstationen im Minutentakt erfasst. Für die angestrebte Genauigkeit der Positionsbestimmung von wenigen Metern ist eine Aktualisierung in einem deutlich längeren Zeitraster ausreichend.

In einer weiteren besonders vorteilhaften Ausgestaltung der Erfindung wird die verdichtete Auswahl aus zeitlichen Änderungen der Korrekturbeiträge gebildet. Die Elektronendichte in der Ionosphäre ändert sich typischerweise langsam und auch stetig, so dass durch eine Übertragung lediglich der Änderungen viel Datenvolumen auf der bidirektionalen Funkverbindung eingespart werden kann.

In einer weiteren besonders vorteilhaften Ausgestaltung der Erfindung werden die Korrekturbeiträge durch einen über ein Netzwerk mit dem Gateway verbundenen Aufbereitungsserver abgerufen, und die verdichtete Auswahl wird durch diesen Aufbereitungsserver erzeugt. Dann muss am Ort der Baustelle nur ein Minimum an Intelligenz in Form des Gateways vorgehalten werden. Es wird weiterhin auch bei der Datenübertragung zur Baustelle Netzwerkbandbreite eingespart. Häufig sind Baustellen noch nicht einer verkabelten Netzanbindung erschlossen, sondern in provisorischer Weise über Mobilfunk, so dass das Datenvolumen begrenzt und/oder mit Kosten verbunden ist. Schließlich kann auch ein zentraler Aufbereitungsserver eine Vielzahl von Gateways versorgen, so dass insoweit noch einmal Hardwareaufwand eingespart werden kann.

In einer weiteren besonders vorteilhaften Ausgestaltung der Erfindung übermittelt die Markierungsvorrichtung die ermittelte Position über die bidirektionale Funkverbindung an das Gateway. Dann kann das Gateway diese Position beispielsweise an den Aufbereitungsserver weiterleiten, damit sie dort in der beschriebenen Weise für die Verdichtung der Korrekturbeiträge genutzt werden kann. Alternativ oder auch in Kombination hierzu kann das Gateway seine eigene Position an den Aufbereitungsserver übermitteln.

Die bidirektionale Funkverbindung kann beispielsweise so ausgestaltet sein, dass die Markierungsvorrichtung auf der Sendefrequenz des Gateways empfängt und das Gateway auf der Sendefrequenz der Markierungsvorrichtung empfängt. Beispielsweise kann das Gateway ein Knoten in einem Netz nach dem LoRa®-Standard für die Kommunikation im "Internet of Things", IoT, sein, und die Markierungsvorrichtungen können an diesen Knoten angebunden sein. Die Knoten können untereinander vernetzt sein. Einer oder mehrere der Knoten in einem LoRa®-Netz können auch eine Verbindung zum Internet bereitstellen.

Nach dem zuvor Beschriebenen ist besonders vorteilhaft die Markierungsvorrichtung mit einem Gegenstand verbunden, dessen Position innerhalb der Sendereichweite des Gateways lokalisiert wird.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: beispielhaftes Ablaufdiagramm des Verfahrens 100;
- Figur 2: beispielhafte Anwendung des Verfahrens 100 zur Lokalisierung eines Objekts 201 auf einer Baustelle 200.

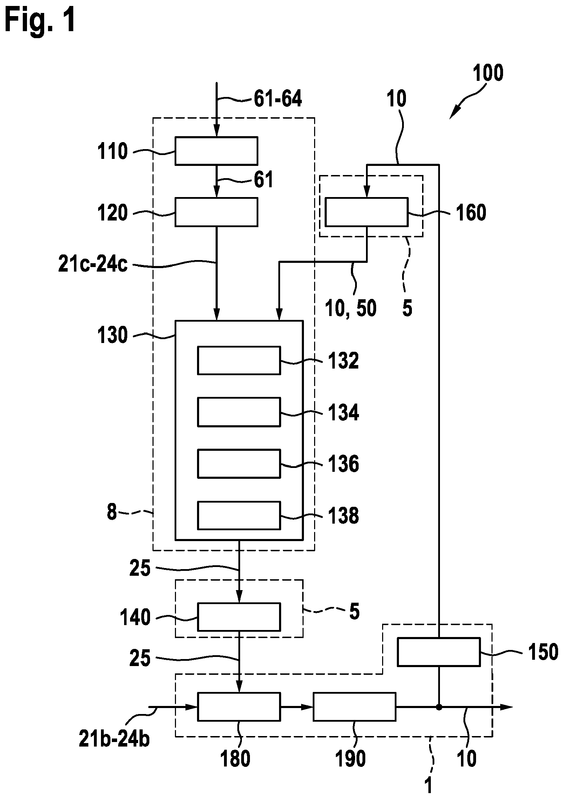

Nach Figur 1 beginnt das Verfahren 100 damit, dass in Schritt 110 durch den Aufbereitungsserver 8 aus mehreren verfügbaren Messstationen 61-64 eine Messstation 61 ausgewählt wird. In Schritt 120 werden von dieser Messstation 61 Korrekturbeiträge 21c-24c, von mindestens vier Satelliten 21-24 eines in Figur 1 nicht dargestellten satellitengestützten Navigationssystems 2 betreffen, abgerufen.

Die Korrekturbeiträge 21c-24c werden in Schritt 130 des Verfahrens 100 verdichtet, wobei dies mit verschiedenen Maßnahmen erfolgen kann, die einzeln oder in Kombination angewendet werden können und von denen in Figur 1 vier beispielhaft eingezeichnet sind. Gemäß Block 132 werden Korrekturbeiträge 21c-24c bezüglich Satelliten, deren Signale voraussichtlich vom Empfänger 11 nicht zu empfangen sind, verworfen. Gemäß Block 134 werden Korrekturbeiträge 21c-24c betreffend diejenigen Satelliten 21-24, deren Konstellation eine besonders genaue Ermittlung der Position 10 der Markierungsvorrichtung 1 ermöglicht, im besonderen Maße berücksichtigt, was beispielweise erfolgen kann, indem nur diese Korrekturbeiträge 21c-24c beibehalten und der Rest verworfen wird. Gemäß Block 136 werden die Korrekturbeiträge 21c-24c zeitlich heruntergetaktet und/oder gemittelt. Gemäß Block 138 werden außerdem nur zeitliche Änderungen der Korrekturbeiträge 21c-24c berücksichtigt.

Schritt 130 liefert insgesamt eine verdichtete Auswahl 25 der Korrekturbeiträge 21c-24c. Diese verdichtete Auswahl 25 wird in Schritt 140 durch das Gateway 5 an die Markierungsvorrichtung 1 übermittelt. Dort werden Laufzeiten 21b-24b von Satellitensignalen 21a-24a in Schritt 180 um die in der Auswahl 25 enthaltenen Korrekturbeiträge 21c-24c bereinigt. Anschließend wird in Schritt 190 die Position 10 der Markierungsvorrichtung 1 ausgewertet.

Diese Position 10 wird in Schritt 150 an das Gateway 5 übermittelt. Das Gateway 5 übermittelt in Schritt 160 die Position 10 der Markierungsvorrichtung 1 gemeinsam mit seiner eigenen Position 50 an den Aufbereitungsserver 8. Die Positionen 10 und/oder 50 können vom Aufbereitungsserver 8 zur Auswahl der relevanten Korrekturbeiträge 21c-24c genutzt werden. Sie könnten auch von vornherein zur Auswahl 110 der Messstation 61 genutzt werden, deren Daten überhaupt in Schritt 120 abgerufen werden. In dem in Figur 1 gezeigten Beispiel ist ein und derselbe Aufbereitungsserver 8 jedoch für mehrere Gateways 5 zuständig, so dass er insgesamt die Daten aller Messstationen 61-64 abruft.

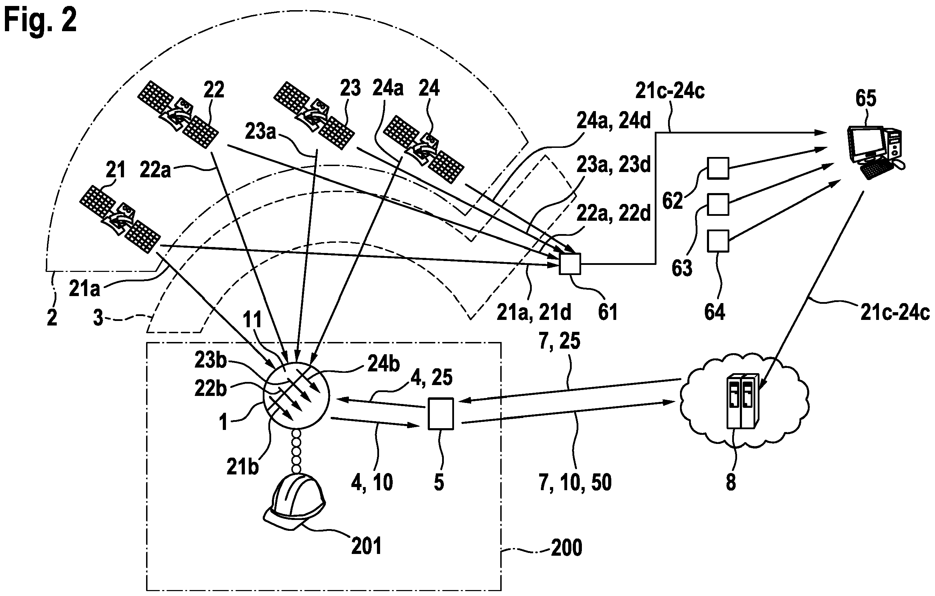

Figur 2 verdeutlicht die Signalwege. Die Satelliten 21-24 senden auf einer ersten Frequenz jeweils ein für die Positionsbestimmung verwendetes Signal 21a-24a aus, das sowohl vom Empfänger 11 der Markierungsvorrichtung 1 als auch von der Messstation 61 empfangen wird. Die Messstation 61 empfängt darüber hinaus auch noch ein auf einer zweiten Frequenz abgestrahltes zweites Signal 21d-24d von jedem der Satelliten 21-24.

Alle Signale 21a-24a sowie 21d-24d müssen auf dem Weg zur Erde die Ionosphäre 3 der Erde passieren. Abhängig von der Elektronendichte in der Ionosphäre 3 werden die Gruppengeschwindigkeiten, und damit auch die Laufzeiten, der Signale 21a-24a und 21d-24d verändert. Diese Veränderung ist frequenzabhängig. Sie kann daher von der Messstation 61, die auf beiden von den Satelliten 21-24 verwendeten Frequenzen empfängt, bestimmt und in Korrekturbeiträge 21c-24c umgesetzt werden. Ein zentraler Datenserver 65 sammelt die Korrekturbeiträge 21c-24c von der Messstation 61 zusammen mit weiteren Korrekturbeiträgen, die auch andere Satelliten betreffen können, von weiteren Messstationen 62-64.

Der Aufbereitungsserver 8 kennt die letzte ermittelte Position 10 der Markierungsvorrichtung 1 sowie die Position 50 des Gateways 8, das über eine bidirektionale Funkverbindung 4 an die Markierungsvorrichtung 1 gekoppelt ist. Basierend hierauf wählt der Aufbereitungsserver 8 aus den Korrekturbeiträgen 21c-24c die relevanten Daten aus und verdichtet diese. Die verdichtete Auswahl 25 wird über das Netzwerk 7 an das Gateway 5 und von dem Gateway 5 über die bidirektionale Funkverbindung 4 an die Markierungsvorrichtung 1 weitergeleitet.

In der Markierungsvorrichtung 1 werden die Laufzeiten 21b-24b der durch den Empfänger 11 von den Satelliten 21-24 empfangenen Signale 21a-24a mit den in der verdichteten Auswahl 25 enthaltenen Korrekturbeiträgen 21c-24c zusammengeführt. Anschließend wird die Position 10 der Markierungsvorrichtung 1 ermittelt. Die Position 10 wird über die bidirektionale Funkverbindung 4 an das Gateway 5 weitergeleitet. Das Gateway 5 befindet sich gemeinsam mit der Markierungsvorrichtung 1 beispielsweise auf einer Baustelle 200 und kann somit genutzt werden, um ein mit der Markierungsvorrichtung 1 verbundenes Objekt 201 auf der Baustelle 200 zu lokalisieren.

Das Gateway 5 übermittelt weiterhin die Position 10 der Markierungsvorrichtung 1 gemeinsam mit seiner eigenen Position 50 an den Aufbereitungsserver 8, damit dieser aus allen verfügbaren Korrekturbeiträgen 21c-24c diejenigen auswählen kann, die am Ort des Empfängers 11 die relevantesten sind. Weiterhin kann der Aufbereitungsserver 8 auch ein mit Positionsangaben versehenes zentrales Register über alle Objekte 201 führen.

## Patentansprüche

1. Verfahren (100) zur Ermittlung der Position (10) mindestens einer Markierungsvorrichtung (1), wobei die Markierungsvorrichtung (1) einen Empfänger (11) für ein satellitengestütztes Navigationssystem (2) aufweist und dazu ausgebildet ist, ihre Position (10) anhand der von einer Mehrzahl von Satelliten (21-24) eines Navigationssystems (2) ausgesendeten Signale (21a-24a) zu ermitteln (190) und hierbei die durch den Empfänger (11) ermittelten Laufzeiten (21b-24b) der Signale um einen Korrekturbeitrag (21c-24c), der den Einfluss der Ionosphäre (3) auf diese Laufzeiten (21b-24b) beschreibt, zu bereinigen (180), wobei die Markierungsvorrichtung (1) über eine bidirektionale Funkverbindung (4) an ein Gateway (5) gekoppelt ist, **gekennzeichnet durch** folgende Schritte:
• anhand der Position (50) des Gateways (5), und/oder anhand einer zuvor ermittelten Position (10) der Markierungsvorrichtung (1), wird eine Messstation (61) ausgewählt (110), die von jedem der Satelliten gleichzeitig ein erstes Signal (21a-24a) auf einer ersten Frequenz und ein zweites Signal (21d-24d) auf einer zweiten Frequenz empfängt und aus dem Vergleich der Signallaufzeiten beider Signale einen satellitenindividuellen Korrekturbeitrag (21c-24c) ermittelt;
• die satellitenindividuellen Korrekturbeiträge (21c-24c) werden von der Messstation (61), und/oder von einem durch die Messstation (61) belieferten Datenserver (65), abgerufen (120);
• es wird eine verdichtete Auswahl (25) der satellitenindividuellen Korrekturbeiträge (21c-24c) generiert (130);
• die verdichtete Auswahl (25) der Korrekturbeiträge (21c-24c) wird über die bidirektionale Funkverbindung (4) an die Markierungsvorrichtung (1) übermittelt (140).

2. Verfahren (100) nach Anspruch 1, **dadurch gekennzeichnet, dass** eine Ranging Integrity Monitoring Station, RIMS, des European Geostationary Navigation Overlay Service, EGNOS, als Messstation (61) gewählt wird (110).

3. Verfahren (100) nach einem der Ansprüche 1 bis 2, **dadurch gekennzeichnet, dass** von mehreren verfügbaren Messstationen (61-64) die zur Position (50) des Gateways (5), bzw. zur zuvor ermittelten Position (10) der Markierungsvorrichtung (1), nächstgelegene Messstation (61) ausgewählt wird (110).

4. Verfahren (100) nach einem der Ansprüche 1 bis 3, **dadurch gekennzeichnet, dass** bei der Generierung (130) der verdichteten Auswahl (25) Korrekturbeiträge (21c-24c), die sich auf vom Empfänger (11) der Markierungsvorrichtung (1) voraussichtlich nicht sichtbare Satelliten (21-24) beziehen, verworfen werden (132).

5. Verfahren (100) nach einem der Ansprüche 1 bis 4, **dadurch gekennzeichnet, dass** bei der Generierung (130) der verdichteten Auswahl (25) Korrekturbeiträge (21c-24c) einer Teilmenge der vom Empfänger (11) der Markierungsvorrichtung (1) voraussichtlich zu empfangenden Satelliten (21-24), deren Konstellation in Bezug auf die Genauigkeit der Ermittlung der Position (10) der Markierungsvorrichtung (1) vorteilhaft ist, besonders berücksichtigt werden (134).

6. Verfahren (100) nach einem der Ansprüche 1 bis 5, **dadurch gekennzeichnet, dass** die Korrekturbeiträge (21c-24c) bei der Generierung der verdichteten Auswahl (25) zeitlich heruntergetaktet und/oder gemittelt werden (136).

7. Verfahren (100) nach einem der Ansprüche 1 bis 6, **dadurch gekennzeichnet, dass** die verdichtete Auswahl (25) aus zeitlichen Änderungen der Korrekturbeiträge (21c-24c) gebildet wird (138).

8. Verfahren (100) nach einem der Ansprüche 1 bis 7, **dadurch gekennzeichnet, dass** die Korrekturbeiträge (21c-24c) durch einen über ein Netzwerk (7) mit dem Gateway (5) verbundenen Aufbereitungsserver (8) abgerufen werden (120) und dass die verdichtete Auswahl (25) durch diesen Aufbereitungsserver (8) erzeugt wird (130).

9. Verfahren (100) nach einem der Ansprüche 1 bis 8, **dadurch gekennzeichnet, dass** die Markierungsvorrichtung (1) die ermittelte Position (10) über die bidirektionale Funkverbindung (4) an das Gateway (5) übermittelt (150).

10. Verfahren (100) nach einem der Ansprüche 8 bis 9, **dadurch gekennzeichnet, dass** das Gateway (5) seine eigene Position (50), und/oder die von der Markierungsvorrichtung (1) übermittelte Position (10), an den Aufbereitungsserver übermittelt (160).

11. Verfahren (100) nach einem der Ansprüche 1 bis 10, **dadurch gekennzeichnet, dass** in der bidirektionalen Funkverbindung (4) die Markierungsvorrichtung auf der Sendefrequenz des Gateways empfängt und das Gateway auf der Sendefrequenz der Markierungsvorrichtung empfängt.

12. Verfahren (100) nach einem der Ansprüche 1 bis 11, **dadurch gekennzeichnet, dass** die Markierungsvorrichtung (1) mit einem Gegenstand (201) verbunden ist, dessen Position innerhalb der Sendereichweite des Gateways (200) lokalisiert wird.
